(19) Europäisches Patentamt European Patent Office Office européen des brevets

(11) **EP 4 687 140 A1**

(12) **EUROPEAN PATENT APPLICATION**

(43) Date of publication:
04.02.2026 Bulletin 2026/06

(21) Application number: 24191760.8

(22) Date of filing: 30.07.2024

(51) International Patent Classification (IPC):
*G10L 19/08* (2013.01)    *H04S 3/00* (2006.01)
*G06N 3/045* (2023.01)    *G10L 19/008* (2013.01)

(52) Cooperative Patent Classification (CPC):
G10L 19/08; G06N 3/045; G10L 19/008;
H04S 3/008; H04S 2400/03

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: **Koninklijke Philips N.V.**
**5656 AG Eindhoven (NL)**

(72) Inventors:
• **SCHUIJERS, Erik Gosuinus Petrus**
**Eindhoven (NL)**
• **KECHICHIAN, Patrick**
**Eindhoven (NL)**

(74) Representative: **Philips Intellectual Property &**
**Standards**
**High Tech Campus 52**
**5656 AG Eindhoven (NL)**

(54) **MULTICHANNEL AUDIO CODING APPARATUS AND METHOD OF OPERATION THEREFOR**

(57)    An encoder comprises a transient extractor (103) generating a residual multichannel audio signal by extracting single channel transient signal components. A combiner circuit (105) generates a set of mono transient signal components by combining single channel transient signal components. A downmix circuit (107) generates downmix audio data by downmixing the residual multichannel audio signal and the mono channel transient signal components, and generates signal upmix parameters for upmixing the residual multichannel audio signal and transient upmix parameters for upmixing the mono channel transient signal components. An output circuit (109) generates an encoded audio data signal comprising the generated data. A decoder has upmixers that upmix the received downmixed residual signal and the mono transient signal components using the received parameters, including generating a plurality of transient signal components for one received mono transient signal component.

**FIG. 1**

EP 4 687 140 A1

**Description**

FIELD OF THE INVENTION

The invention relates to audio apparatuses and methods of operation therefor, and specifically, but not exclusively, to encoding and/or decoding of stereo signals.

BACKGROUND OF THE INVENTION

Spatial audio applications have become numerous and widespread and increasingly form at least part of many audiovisual experiences. Indeed, new and improved spatial experiences and applications are continuously being developed which result in increased demands on the audio processing and rendering.

A lot of research and development effort has focused on providing efficient and high quality audio encoding and audio decoding for spatial audio. A frequently used spatial audio representation is multichannel audio representations, including stereo representation, and efficient encoding of such multichannel audio based on downmixing multichannel audio signals to downmix channels with fewer channels have been developed. One of the main advances in low bit-rate audio coding has been the use of parametric multichannel coding where a downmix signal is generated together with parametric data that can be used to upmix the downmix signal to recreate the multichannel audio signal.

In particular, instead of traditional mid-side or intensity coding, in parametric multichannel audio coding, a multichannel input signal is downmixed to a lower number of channels (e.g. two to one) and multichannel image (stereo) parameters are extracted. Then the downmix signal is encoded using a more traditional audio coder (e.g. a mono audio encoder). The bitstream of the downmix is multiplexed with the encoded multichannel image parameter bitstream. This bitstream is then transmitted to the decoder, where the process is inverted. First the downmix audio signal is decoded, after which the multichannel audio signal is reconstructed guided by the encoded multichannel image/ upmix parameters.

An example of stereo coding is described in E. Schuijers, W. Oomen, B. den Brinker, J. Breebaart, "Advances in Parametric Coding for High-Quality Audio", 114th AES Convention, Amsterdam, The Netherlands, 2003, Preprint 5852. In the described approach, the downmixed mono signal is parametrized by exploiting the natural separation of the signal into three components (objects): transients, sinusoids, and noise. In E. Schuijers, J. Breebaart, H. Pumhagen, J. Engdegård, "Low Complexity Parametric Stereo Coding", 116th AES, Berlin, Germany, 2004, Preprint 6073 more details are provided describing how parametric stereo was realized with a low (decoder) complexity when combining it with Spectral Band Replication (SBR).

In the described approaches, the decoding is based on the use of the so-called decorrelation process. The decorrelation process generates a decorrelated helper signal from the monaural signal. In the stereo reconstruction process, both the monaural signal and the decorrelated helper signal are used to generate the upmixed stereo signal based on the upmix parameters. Specifically, the two signals may be multiplied by a time- and frequency-dependent 2x2 matrix having coefficients determined from the upmix parameters to provide the output stereo signal.

However, although Parametric Stereo (PS) and similar downmix encoding/ decoding approaches were a leap forward from traditional stereo and multichannel coding, the approach is not optimal in all scenarios. In particular, known encoding and decoding approaches tend to introduce some distortion, changes, artefacts etc. that may introduce differences between the (original) multichannel audio signal provided to the encoder and the multichannel audio signal recreated at the decoder. Typically, the audio quality may be degraded and imperfect recreation of the multichannel audio signal occurs. Further, the data rate may still be higher than desired and/or the complexity/ resource usage of the processing may be higher than preferred. In particular, transient properties are often difficult to encode effectively.

A further issue is that it is often particularly desirable to reduce the complexity and computational load, especially at the decoder side.

Hence, an improved approach would be advantageous. In particular an approach allowing increased flexibility, improved adaptability, an improved performance, increased audio quality, improved audio quality to data rate trade-off, reduced complexity and/or resource usage, reduced computational load, facilitated implementation, improved performance for transient signal components, and/or an improved spatial/multi-channel audio experience would be advantageous.

SUMMARY OF THE INVENTION

Accordingly, the Invention seeks to preferably mitigate, alleviate or eliminate one or more of the above mentioned disadvantages singly or in any combination.

According to an aspect of the invention there is provided an audio apparatus comprising: a receiver arranged to receive a multichannel audio signal; a transient extractor arranged to generate a residual multichannel audio signal by extracting a set of single channel transient signal components from the multichannel audio signal, each single channel transient signal component of the set of single channel transient signal components being a mono signal component from a channel of the multichannel audio signal; a combiner circuit arranged to generate a set of mono transient signal components by combining single channel transient signal components of the set of single channel transient signal components, the combiner circuit being arranged to combine at least a first group of a plurality of single channel transient signal components of the set of single channel transient signal components into a first mono transient signal component of the set of mono transient signal components; a downmix circuit arranged to generate downmix audio data by downmixing the residual multichannel audio signal and the set of mono channel transient signal components, the downmix circuit being arranged to generate signal upmix parameters for upmixing the residual multichannel audio signal and transient signal component upmix parameters for upmixing the set of mono channel transient signal components; and an output circuit arranged to generate an encoded audio data signal for the multichannel audio signal, the encoded audio data signal comprising the downmix audio data, the signal upmix parameters, and the transient signal component upmix parameters.

The approach may provide an improved audio experience in many embodiments. For many signals and scenarios, the approach may provide improved representation of a multichannel audio signal allowing improved generation/ reconstruction of a multichannel audio signal with an improved perceived audio quality. The approach may provide improved representation of the transients of the original input multichannel audio signal while reducing the data rate required to represent transients. The approach may typically reduce/mitigate/remove transient audio quality degradation, such as e.g. smearing in time, for encoding approaches based on downmixing of multiple signals.

The approach may in many embodiments allow an improved multichannel audio signal to be generated by allowing the encoder to adapt/ modify the processing of the apparatus generating the multichannel audio signal based on transient properties.

The approach may provide an efficient implementation and may in many embodiments allow a reduced complexity and/or resource usage. The approach may in many scenarios allow a reduced data rate for data representing a multichannel audio signal using a downmix signal. Indeed, in many embodiments, substantially improved audio quality may be achieved with very little increase in the overall data rate.

The approach may improve the performance of an encoder/decoder arrangement when encoding and decoding stereo signals for transient signals, such as e.g. applause-like signals.

The audio apparatus may specifically be an audio encoder apparatus.

The processing may be in time frequency segments or tiles. Each time frequency segment/tile may represent a frequency interval in a time interval. In many embodiments, the input multichannel audio signal may be divided into time segments/intervals and a frequency representation of the signal in the time segment/interval may be provided by signal values representing different frequency segments of the signal in the time segment/interval.

The set of mono transient signal components includes fewer transient signal components than the set of single channel transient signal components.

The signal upmix parameters may comprise sets of upmix parameters, each set of upmix parameters comprising at least one of: a level difference parameter indicative of a level difference between channels of the multichannel audio signal; a correlation parameter indicative of a coherence between channels of the multichannel audio signal; a timing difference parameter indicative of a timing difference between channels of the multichannel audio signal, and a phase difference parameter indicative of a phase difference between channels of the multichannel audio signal.

The combiner circuit may be arranged to combine at least a first group of a plurality of single channel transient signal components of the set of single channel transient signal components into a mono transient signal component of the set of mono transient signal components.

According to an optional feature of the invention, the combiner circuit is arranged to select single channel transient signal components for the first group dependent on a time difference between the single channel transient signal components of the set of single channel transient signal components.

This may provide an advantageous approach for many scenarios, including e.g. providing an advantageous trade-off between complexity, computational resources, data rate and/or the perceived audio quality of the generated multichannel audio signal.

The first group may specifically comprise two single channel transient signal components. The combiner circuit may be arranged to select single channel transient signal components for the first group in response to a detection that a time position difference between selected single channel transient signal components is less than a threshold.

According to an optional feature of the invention, the combiner circuit is arranged to generate the first mono transient signal component by a weighted combination of single channel transient signal components of the first group.

This may provide an advantageous approach for many scenarios, including e.g. providing an advantageous trade-off between complexity, computational resources, data rate, and/or the perceived audio quality of the generated multichannel audio signal.

In many embodiments, the weights may depend on signal levels of single channel transient signal components of the first group.

In some cases, weights may be binary, and/or the weighted combination may be a selection combination.

In many embodiments, the weighted combination may include a time shift of at least one of the single channel transient signal components of the first group. In many embodiments, the weighted combination may include a time alignment of the single channel transient signal components of the first group. The transient signal component upmix parameters may include an indication of the time offset/time alignment, such as specifically an interchannel time difference indicating a time shift/offset between the first mono transient signal component and at least one of the single channel transient signal components of the first group.

According to an optional feature of the invention, the combiner circuit is arranged to generate the first mono transient signal component by a selection of a single channel transient signal component from the first group.

This may provide an advantageous approach for many scenarios, including e.g. providing an advantageous trade-off between complexity, computational resources, data rate, and/or the perceived audio quality of the generated multichannel audio signal.

According to an optional feature of the invention, the transient signal component upmix parameters for the first mono transient signal component comprises at least one of: a level difference parameter indicative of a level difference between single channel transient signal components of the first group; and a timing difference parameter indicative of a time difference between single channel transient signal components of the first group.

This may provide an advantageous approach for many scenarios, including e.g. providing an advantageous trade-off between complexity, computational resources and/or the perceived audio quality of the generated multichannel audio signal.

The time difference may be larger than 1, 2, 5, 10 msec in some embodiments.

In some embodiments, the transient signal component upmix parameters may comprise a correlation parameter indicative of a coherence of single channel transient signal components of the first group.

According to an optional feature of the invention, the transient signal component upmix parameters for the first mono transient signal component comprises upmix parameters for upmixing a plurality of upmixed transient signal components.

This may provide an advantageous approach for many scenarios, including e.g. providing an advantageous trade-off between complexity, computational resources, data rate and/or the perceived audio quality of the generated multichannel audio signal.

According to an optional feature of the invention, the downmix circuit is arranged to generate the downmix audio data to represent a downmix audio signal being a combination of a downmix signal component of the residual multichannel audio signal and mono transient signal components of the set of mono transient signal components.

This may provide an advantageous approach for many scenarios, including e.g. providing an advantageous trade-off between complexity, computational resources, data rate and/or the perceived audio quality of the generated multichannel audio signal.

The downmix audio data may in many embodiments include audio data for a single combined downmix signal which includes both the mono transient signal components and the residual downmix signal.

According to an optional feature of the invention, the downmix circuit is arranged to generate the downmix audio data to comprise separate audio data for a downmix audio signal of the residual multichannel audio signal and for the set of mono transient signal components.

This may provide an advantageous approach for many scenarios, including e.g. providing an advantageous trade-off between complexity, computational resources, data rate, and/or the perceived audio quality of the generated multichannel audio signal.

The downmix audio data may in many embodiments include separate audio data for the mono transient signal components and the residual downmix signal. Audio data may be provided which describes the residual downmix signal and independent and separate audio data may be provided describing the residual downmix signal, and/or describing the mono transient signal components, including possibly separate data for each mono transient signal component.

The upmix data for a plurality of transients may include upmix data for upmixing the first mono transient signal component to a plurality of single channel transient signal components for different channels of the output multichannel audio signal.

According to an aspect of the invention, there is provided audio apparatus comprising: a receiver arranged to receive an encoded audio data signal representing a multichannel audio signal, the encoded audio data signal comprising downmix audio data representing a downmix of a residual multichannel audio signal, a set of mono channel transient signal components, signal upmix parameters for upmixing the residual multichannel audio signal, and transient signal component upmix parameters for upmixing the set of mono transient signal components, the transient signal component upmix parameters for a first mono transient signal component of the set of mono transient signal components comprising upmix data for a plurality of transients; a first upmixer arranged to generate a set of single channel transient signal components by upmixing the set of mono transient signal components based on the transient signal component upmix parameters, including generating a plurality of single channel transient signal components from the first mono transient signal component using the upmix data for the plurality of transients; a second upmixer arranged to generate an upmixed residual multichannel audio signal from the downmix of the residual multichannel audio signal and the signal upmix parameters; and an output circuit arranged to generate an output multichannel audio signal by combining at least the upmixed residual multichannel audio signal and the set of single channel transient signal components.

The upmix data for a plurality of transients may include upmix data for upmixing the first mono transient signal component to a plurality of single channel transient signal components for different channels of the output multichannel audio signal.

The second upmixer may specifically be arranged to generate the output multichannel audio signal by applying a matrix multiplication to (samples of) the (residual) downmix audio signal and a decorrelated signal with the matrix coefficients being determined from the sets of upmix parameters.

The upmixed multichannel audio signal, the upmixed multichannel transient audio component, and the output multichannel audio signal may have the same number of channels.

This may provide an advantageous approach for many scenarios, including e.g. providing an advantageous trade-off between complexity, computational resources, data rate and/or the perceived audio quality of the generated multichannel audio signal.

According to an optional feature of the invention, the downmix audio data comprises encoded audio data for a downmix audio signal comprising both the downmix of a residual multichannel audio signal and the set of mono audio signals; and the receiver is arranged to generate the downmix of a residual multichannel audio by extracting the set of mono transient signal components from the downmix audio signal.

This may provide an advantageous approach for many scenarios, including e.g. providing an advantageous trade-off between complexity, computational resources, data rate and/or the perceived audio quality of the generated multichannel audio signal.

According to an optional feature of the invention, the receiver is arranged to extract the set of mono transient signal components using the transient signal component upmix parameters.

This may provide an advantageous approach for many scenarios, including e.g. providing an advantageous trade-off between complexity, computational resources, data rate and/or the perceived audio quality of the generated multichannel audio signal.

The receiver may specifically be arranged to extract the set of mono transient signal components using a timing indication of the transient signal component upmix parameters, such as specifically an interchannel time difference.

According to an optional feature of the invention, the first upmixer is arranged to generate at least one single channel transient component by upmixing a mono transient signal component and a noise signal component dependent on the transient signal component upmix parameters.

This may provide particularly advantageous operation in many scenarios and embodiments.

According to another aspect of the invention, there is provided a method of operation for an audio apparatus, the method comprising: receiving a multichannel audio signal; generating a residual multichannel audio signal by extracting a set of single channel transient signal components from the multichannel audio signal, each single channel transient signal component of the set of single channel transient signal components being a mono signal component from a channel of the multichannel audio signal; generating a set of mono transient signal components by combining single channel transient signal components of the set of single channel transient signal components, the combiner circuit being arranged to combine at least a first group of a plurality of single channel transient signal components of the set of single channel transient signal components into a first mono transient signal component of the set of mono transient signal components; generating a downmix audio data by downmixing the residual multichannel audio signal and the set of mono channel transient signal components, the downmix circuit further being arranged to generate signal upmix parameters for upmixing the residual multichannel audio signal and transient signal component upmix parameters for upmixing the set of mono channel transient signal components; and generating an encoded audio data signal for the multichannel audio signal, the encoded audio data signal comprising the downmix audio data, the signal upmix parameters, and the transient signal component upmix parameters.

According to an optional feature of the invention, the transient signal component upmix parameters has at least one of a higher temporal resolution and a lower frequency resolution than the signal upmix parameters.

This may provide particularly advantageous operation in many scenarios and embodiments.

According to another aspect of the invention, there is provided a method of operation for an audio apparatus comprising: receiving an encoded audio data signal representing a multichannel audio signal, the encoded audio data signal comprising downmix audio data representing a downmix of a residual multichannel audio signal, a set of mono channel transient signal components, signal upmix parameters for upmixing the residual multichannel audio signal, and transient signal component upmix parameters for upmixing the set of mono transient signal components, the transient signal component upmix parameters for a first mono transient signal component of the set of mono transient signal components comprising upmix data for a plurality of transients; generating a set of single channel transient signal components by upmixing the set of mono transient signal components based on the transient signal component upmix parameters, including generating a plurality of single channel transient signal components from the first mono transient signal component using the upmix data for the plurality of transients; generating an upmixed residual multichannel audio signal from the downmix of the residual multichannel audio signal and the signal upmix parameters; and generating an output multichannel audio signal by combining at least the upmixed residual multichannel audio signal and the set of single channel transient signal components.

These and other aspects, features and advantages of the invention will be apparent from and elucidated with reference to the embodiment(s) described hereinafter.

BRIEF DESCRIPTION OF THE DRAWINGS

Embodiments of the invention will be described, by way of example only, with reference to the drawings, in which

FIG. 1 illustrates some elements of an example of an encoding audio apparatus in accordance with some embodiments of the invention;
FIG. 2 illustrates some elements of an example of a decoding audio apparatus in accordance with some embodiments of the invention;
FIG. 3 illustrates an example of audio signals comprising transients;
FIG. 4 illustrates an example of audio signals comprising transients;
FIG. 5 illustrates an example of audio signals comprising transients;
FIG. 6 illustrates an example of audio signals comprising transients;
FIG. 7 illustrates an example of audio signals comprising transients;
FIG. 8 illustrates an example of audio signals comprising transients; and
FIG. 9 illustrates some elements of a possible arrangement of a processor for implementing elements of an audio apparatus in accordance with some embodiments of the invention.

DETAILED DESCRIPTION OF SOME EMBODIMENTS OF THE INVENTION

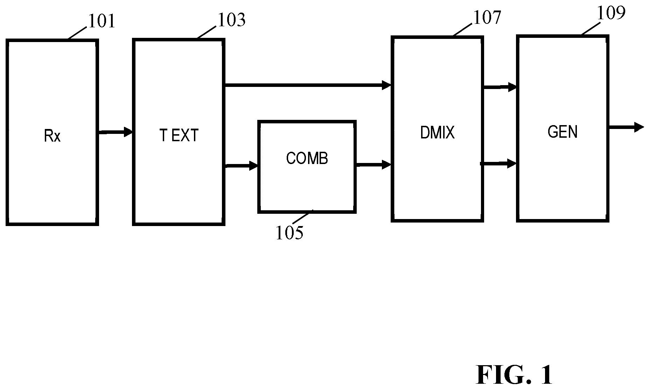

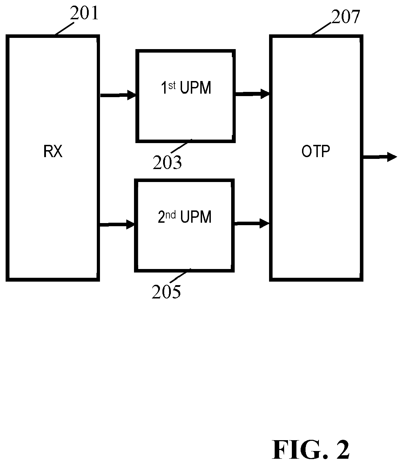

FIG. 1 illustrates an example of an audio apparatus arranged to generate an audio data signal representing a multichannel audio signal henceforth referred to as the input multichannel audio signal. FIG. 2 illustrates some elements of an audio apparatus for generating an output multichannel audio signal in accordance with some embodiments of the invention. The audio data signal generated by the audio apparatus of FIG. 1 may specifically be fed to the audio apparatus of FIG. 2 which may be arranged to generate the output multichannel audio signal as a replica of the input multichannel audio signal. The audio apparatus of FIG. 2 will also be referred to as a decoder audio apparatus (or just as a decoder) and the audio apparatus of FIG. 1 will also be referred to as an encoder audio apparatus (or just as an encoder).

The encoder audio apparatus is arranged to receive an input multichannel audio signal and to generate an encoded audio data signal that represents the input multichannel audio signal with the representation including at least one downmix audio signal together with sets of upmix parameters. Specifically, the encoder audio apparatus may be a stereo encoder that receives a stereo signal and encodes it as a(t least one) mono audio signal with associated upmix parametric data.

The encoder audio apparatus comprises a receiver 101 which receives the input multichannel audio signal, and specifically a stereo signal, from an internal or external source.

In some embodiments, the encoder audio apparatus and the decoder audio apparatus are arranged to perform subband processing and at least some of the processing may be performed on frequency domain signals. For example, upmix parameters may be generated for different (frequency) subbands of the input multichannel audio signal and the generated downmix audio signal(s).

The encoder and decoder audio apparatuses may accordingly as part of the processing include functionality for converting between the time and frequency domains. For example, a filter bank may be included to generate a frequency subband representation of an audio signal. For example, the receiver 101 may comprise a filter bank that is applied to all the channels of the input multichannel audio signal such that each channel signal is divided into subbands. Downmixing may then be performed on a per subband basis with upmix parameters being determined for each subband and a subband downmix signal being generated. The subband downmix audio signal may then in some cases be included directly in the audio data signal as a subband downmix audio signal or may be transformed to the time domain to provide a time domain signal.

The filter bank may be Quadrature Mirror Filter (QMF) bank or may e.g. be implemented by a Fast Fourier Transform (FFT), but it will be appreciated that many other filter banks and approaches for dividing an audio signal into a plurality of subband signals are known and may be used. The filterbank may specifically be a complex-valued pseudo QMF bank, resulting in e.g. 32 or 64 complex-valued sub-band signals.

The processing is furthermore typically performed in time segments. In most embodiments, the input multi-channel audio signal is divided into time intervals/segments/frames with a conversion to the frequency/subband domain by applying e.g. an FFT or QMF filtering to the samples of each signal. For example, each channel of the multichannel audio signal may be divided into time segments of 2048, 1024, or 512 samples which may then be processed to generate a plurality (e.g. 32, 16, 8) of subband signals of e.g. 64, 32 or 16 subband samples. Thus, a set of samples may be determined for each subband of the downmix audio signal. Further, for each time segment/ interval and frequency interval/subband, a set of upmix parameters may be generated.

The encoder audio apparatus comprises a transient detector 103 which is arranged to detect transients in the individual input multichannel audio signal. The transient detector 103 is specifically arranged to detect transients in the individual channels of the multichannel audio signal, and thus may specifically in many embodiments perform a single channel transient detection/extraction operation on each of the channels of the multichannel audio signal. Specifically, for a stereo signal, transient detection may be performed to detect transient signal components in the left channel and transient signal components in the right channel. The transient detector 103 is thus arranged to extract single channel transient signal components from the input multichannel audio signal where each single channel transient signal component is a mono signal component from one channel of the multichannel audio signal. Specifically, each single channel transient signal component may be generated to correspond/represent/comprise/consist of one transient in a single channel.

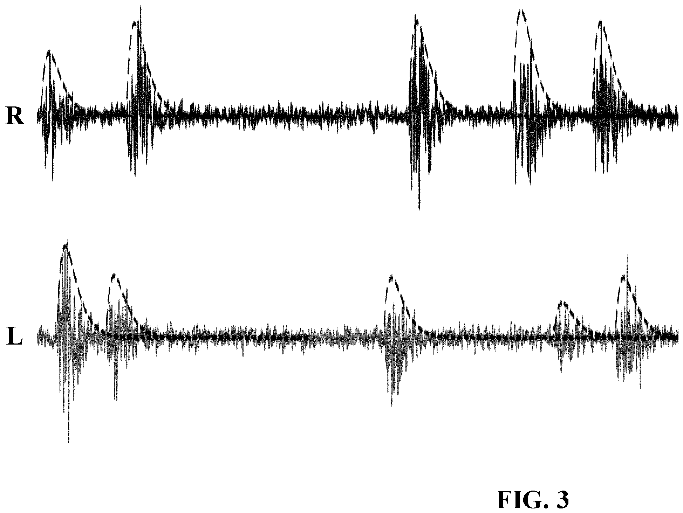

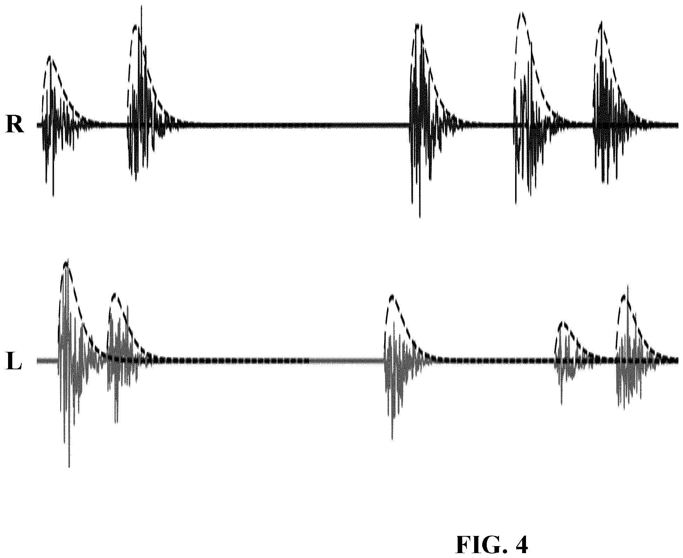

As an example, FIG. 3 shows an example of an input multichannel audio signal in the form of a stereo signal which consists of a diffuse background signal component on which several transients in the form of noise bursts are superimposed. For clarity, the dotted lines indicate temporal envelopes for the noise bursts. The transient detector 103 may extract the transient components to result in a transient signal such as that illustrated in FIG. 4. As illustrated, each of the two signals include a number of transient signal components corresponding to the individual transients of respectively the left and right signals.

It will be appreciated that many different approaches and algorithms are known for detecting transients in an audio signal and that any suitable approach may be used by the transient detector 103.

For example, a classical signal processing approach can be used that performs the operations of:

- Detecting the onset (time) positions of transients.
- Performing temporal envelope estimation of transient at onset position.
- Modelling the signal under envelope, e.g. using a limited number of sinusoids or spectrally shaped noise.

Another approach based on wideband energies estimated using fast and slow smoothing factors may be used to detect and separate transients such as e.g. disclosed in Adami, A., Herzog, A., Disch, S. and Herre, J., 2017, October. Transient-to-noise ratio restoration of coded applause-like signals. In 2017 IEEE Workshop on Applications of Signal Processing to Audio and Acoustics (WASPAA) (pp. 349-353). IEEE. An alternative approach based on classical stationary noise estimation to estimate the background which can be assumed to be stationary, e.g. using an approach as disclosed in Martin, R., 2001. Noise power spectral density estimation based on optimal smoothing and minimum statistics. IEEE Transactions on speech and audio processing, 9(5), pp.504-512.

In many embodiments, the transient detection may be based on comparing (typically an average) signal level (e.g. power/amplitude/envelope level) determined for a shorter time interval to a signal level determined for a longer time interval (with the longer time interval often having a larger duration of at least 2,5, or 10 times the duration of the shorter time interval). The longer time interval may be a neighbor time interval of the shorter time interval, and/or may often be adjacent or surrounding the shorter time interval.

Thus, in many embodiments, the transient detector 103 may be arranged to generate transient signal components comprising a detected transient from one of the channels of the multichannel signal from a comparison of a signal level of the channel signal in a first time window to a signal level of the channel signal in a second time window where the second time window exceeds the first time window (e.g. by a factor of at least 2, 5, 10 times). The signal level for a time interval may typically be an average, median, or mean value for the time interval.

One specific approach for detecting/extracting/generating the transient signal component may be based on tracking fast changes in the signal envelope (either wideband or per frequency spectrum) relative to a slowly changing background. The difference between these signals may be used to detect onset and offsets of transients.

For example, the magnitude of a channel signal's time-frequency representation may be determined, and the resulting frequency envelopes may be summed across frequency bands. Two smoothed versions of this envelope may then be created, with one tracking the envelope more slowly than the other. One envelope signal may represent the slowly varying background envelope, and the other may apply a time-constant that provides much faster tracking and thus also tracking of the signal levels of short term transients.

As a specific example, a first order exponential smoothing or a smoothing moving average filter may be used to create the smoothed envelope. In the case of the fast-tracking envelope, the instantaneous envelope can also be used. The envelope measures may specifically be determined as:

$$\tilde{x}_s(n) = \alpha_s |x_m(n)| + (1 - \alpha_s)\tilde{x}_s(n-1)$$

$$\tilde{x}_f(n) = \alpha_f |x_m(n)| + \left(1 - \alpha_f\right)\tilde{x}_f(n-1)$$

where $\tilde{x}_s(n)$ and $\tilde{x}_f(n)$ are the slow and fast envelopes respective with $\alpha_s$, $\alpha_f \in (0,1]$ and $\alpha_f \gg \alpha_s$. It will be appreciated that more generally two different filters with different low pass characteristics can be applied (with the filter for the slow envelope tracking having a stronger low pass filtering characteristic).

The ratio between the fast and slow-tracking envelopes can then be used to signal sharp changes with respect to the residual signal which provides an indication of the presence of a transient, and thus may be used as the transient signal. For example, the transient/mask signal may be generated as:

$$m(n) = \min\left(\max(1.0 - \frac{\tilde{x}_s(n)}{\tilde{x}_f(n) + \varepsilon}, 0.0), 1.0\right)$$

For transients, $x_f(n) \gg x_s(n)$, and accordingly $m(n) \to 1$. $\varepsilon$ is a small constant to prevent division by zero. Thus, this approach may provide a transient signal m(n) which is close to zero for strong transients and substantially 0 if there is no transient.

In some embodiments the mask can be further binarized by thresholding (Th) on values of $m(n) > 0$, where $m(n) = 1$ *if $m(n) > Th$,* and zero otherwise. The value of *Th* can be set to 0.6, for example.

In other embodiments, an activation function such as a sigmoid function can be used to convert the value of $m(n)$ into a probability score between 0 and 1, e.g:

$$m(n) = \text{sigmoid}\left(1.0 - \frac{\tilde{x}_s(n)}{\tilde{x}_f(n) + \varepsilon}\right)$$

Another approach to detect transients is to track the background signal using minimum tracking of the envelopes (like the minimum statistics approach for stationary noise tracking) per frequency band (ref. e.g. Martin, R., 2001. Noise power spectral density estimation based on optimal smoothing and minimum statistics. IEEE Transactions on speech and audio processing, 9(5), pp.504-512).

The transient signal can then be written in the frequency domain as,

$$M(k,l) = \min\left(\max\left(1.0 - \frac{|X_s(k,l)|}{\max(|X_m(k,l)| - \gamma|X_s(k,l)|, g_m)}, 0\right), 1.0\right),$$

where $X_m(k, l)$ is the time-frequency representation of the (mono) downmix audio signal, $X_s(k, l)$ is the time-frequency estimate of the background signal using minimum tracking and $\gamma$ is an over-subtraction factor ($\geq 1.0$) to account for under-estimating the background signal. $g_m$ is a small constant $> 0$ to prevent negative value and division by zero errors.

As another example, the transient detector 103 may include a trained artificial neural network which is arranged to receive the downmix audio signal and directly generate a transient signal. For example, an artificial neural network may be trained to generate a per-sample probability value indicating the likelihood of the samples belonging to a transient component or not based on labelled data or scores produced by the aforementioned methods.

Once detected, the transient detector 103 may extract a given single channel transient signal components. For example, the separation of a channel signal into a transient signal component and a residual signal may e.g. be achieved as:

$$t(n) = g(n)m(n)$$

$$r(n) = (1 - g(n))m(n).$$

where m(n) represents e.g. a channel signal of the input multichannel audio signal and g(n) is the detection function previously described.

The transient detector 103 may accordingly detect and extract single channel transient signal components in each of the channels of the multichannel audio signal. The single channel transient signal components may be generated as individual signal components or may be generated as parts (such as time intervals) of a combined channel transient signal. For example, in the example of FIG. 4, the single channel transient signal components are included as parts/elements/time intervals of single channel transient signal, with one of these being generated for each channel of the multichannel audio signal.

The transient detector 103 generates a residual signal which may be generated by the extraction of the single channel transient signal components from the channel signals of the multichannel audio signal. In many cases, the residual signal may be generated by for each channel subtracting the single channel transient signal components for that channel. The residual channel may be a multichannel audio signal in which the single channel transient signal components detected by the transient detector 103 have been removed from the channels of the input multichannel audio signal. In some embodiments, the transient detector 103 may be arranged to divide the input multichannel audio signal into the residual multichannel audio signal and the single channel transient signal components.

The transient detector 103 is coupled to a combiner circuit 105 which generates a set of mono transient signal components by combining some of the single channel transient signal components that were extracted by the transient detector 103. For example, the combiner circuit 105 may in some embodiments be arranged to select a subset of the detected single channel transient signal components. As an example, if two single channel transient signal components are detected in different channels and have a time difference that is less than a given threshold, the combiner circuit 105 may be arranged to only retain the strongest transient signal component while discarding the weaker transient signal component. Thus, the combiner circuit 105 may reduce the total number of transient signal components by combining (including in particular selection combining where a single (or at least a subset of) transient signal component(s) is selected) some of the single channel transient signal components, and in particular typically single channel transient signal components in different channels but close to each other in time. The detected set of single channel transient signal components may thus be combined into a set of mono transient signal components that has fewer members than the set of single channel transient signal components. The combiner circuit 105 may be arranged to determine a group of single channel transient signal components which are then combined into a set of one or more mono transient signal components, where the set of mono transient signal components includes fewer single channel transient signal components than the group of single channel transient signal components. The combiner circuit 105 may repeat this process for a number of different groups, including e.g. repeating the process until all single channel transient signal components have been included in (or at least considered for inclusion in) a group.

In some embodiments, the combiner circuit 105 is arranged to generate the mono transient signal components by a weighted combination of single channel transient signal components of a given selected group. For example, in some cases, single channel transient signal components may be multiplied by weights followed by a summation of the result. The weights may be determined in dependence on various parameters. For example, the weights may be determined to be monotonically increasing functions of the signal level/energy of the single channel transient signal components. Thus, in such an example, the mono transient signal component is generated to weigh stronger signals more than weaker signals when generating the common/combined mono transient signal component. In some cases, the weight dependencies may be linear, but in many embodiments, a non-linear function may be used. In the extreme case, the weight for the single channel transient signal component with the highest signal level or energy may be set to one with all other weights being set to zero. Such an example may correspond to a selection combining where the strongest single channel transient signal component is selected to represent all single channel transient signal components of the group being combined. In addition, the mono transient signal components may be time-aligned before weighted combination. This may prevent temporal smearing of the original temporal envelopes.

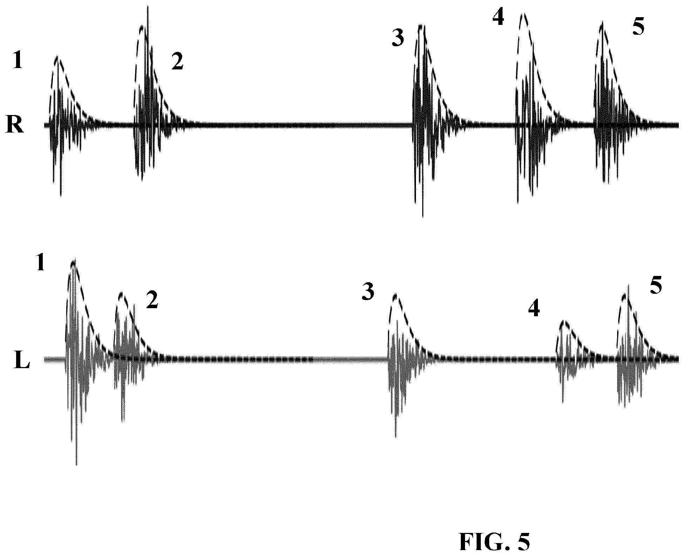

As a specific example of a suitable operation for many applications, the combiner circuit 105 may for a stereo signal, such as e.g. that of FIGs. 3 and 4, proceed to first form pairs of single channel transient signal component. For example, in a low complexity embodiment, the onset time/positions of transients are determined, and a pair is formed by the shortest distance between a left and right transient. E.g. for the example signals of FIG. 4, a pairing as visualized in FIG. 5 may be determined resulting in the transient signal component pairs (L1, R1), (L2, R2), (L3, R3), (L4, R4) and (L5, R5). In some embodiments, these pairs may then all be combined by selecting only one transient signal component of each pair, and this typically being the highest energy/level/amplitude/power transient signal component. Thus, a selection combining may be performed for each transient signal component pair.

In some embodiments, the combination/pairing may further be dependent on various properties of the transient signal component. For example, if a time difference between transient signal components is more than a given threshold, the transient signal components may not be paired, or equivalently no combining may be performed for the corresponding pair. For example, for the example of FIG. 5, transient signal components L4 and R4 may have a time difference exceeding the given threshold, and may be considered to be individual/separate transients. In this case, the combiner circuit 105 may accordingly determine the transient signal component pairs (L1, R1), (L2, R2), (L3, R3), (L5, R5) and the individual transient signal components L4 and R4.

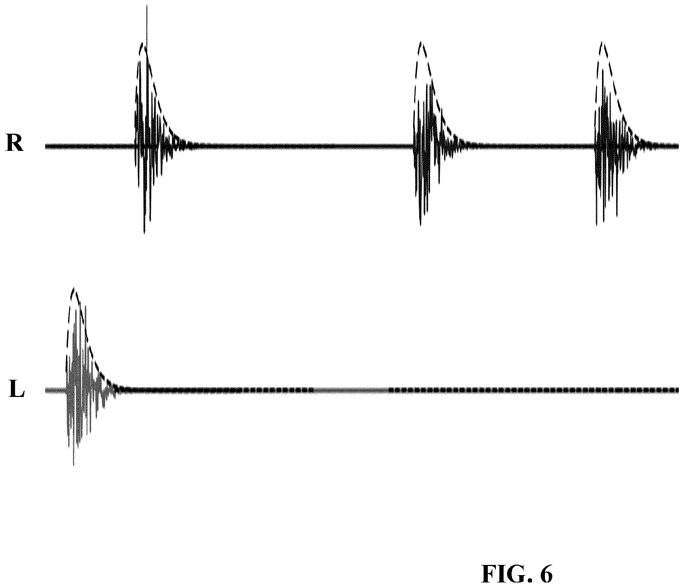

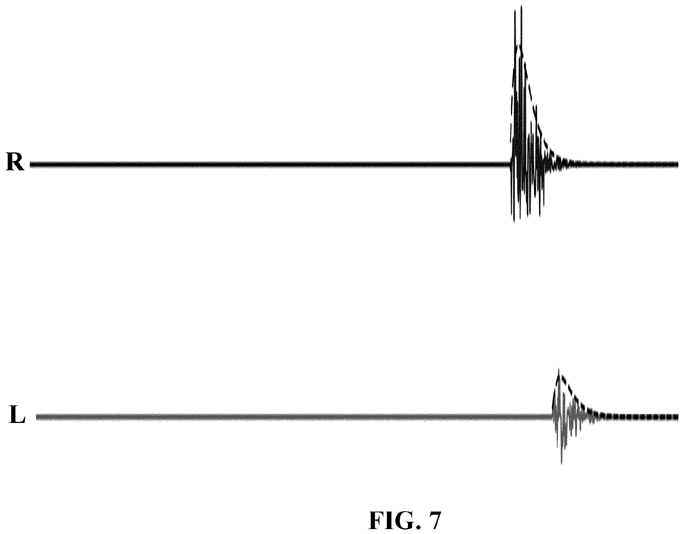

The combiner circuit 105 may then for each transient signal component pair determine the dominant transient. Dominance can be determined based on the amplitude of the signal, the order, a combination, or more complex metrics resulting in a more equal spread of transients over time. For the transient pairs (L1, R1), (L2, R2), (L3, R3), (L5, R5), the dominant transients are R1, L2, L3 and L5, which as illustrated in FIG. 6 results in four mono transient signal components that each represent a transient signal component pair, i.e. each represents transient signal components of two channels. In addition, as illustrated in FIG. 7, the combiner circuit 105 generates two mono transient signal components that each represent only a single transient signal component of the input multichannel audio signal, i.e. which each represents a transient in only one of the channels of the multichannel audio signal.

In addition to the mono transient signal components themselves, the combiner circuit 105 may be arranged to determine parameters indicative of properties of the single channel transient signal components. Such parameters, henceforth also referred to as transient parameters, may for example include one or more of the following:

A channel indication. An indication of the channel of the multichannel audio signal in which a given single channel transient signal components has been detected. For mono transient signal components generated by a combination of single channel transient signal components, the channel indication may for example indicate the channel of the multichannel audio signal in which the selected transient signal component was detected (for selection combining) or e.g. the channel for a dominant transient signal component/the transient signal component with the largest signal level. For example, a channel indication indicating whether a transient signal component is (mainly) for the left or right channel may be determined.

A timing indication, A timing indication may be determined that is indicative of a time offset/time instance for the transient signal component. For example, a time indication may be determined which indicates a time of onset of the transient signal component.

A duration indication. A duration indication may be determined which indicates the duration of the transient signal component.

A level indication. A level indication may indicate a level, such as an envelope, power, or energy value, for the single channel transient signal component.

Such transient parameters may be determined for single channel transient signal components and/or for mono transient signal components. For example, for single channel transient signal components that are not combined, and thus where each single channel transient signal component is also a mono transient signal component generated/output by the combiner circuit 105, the transient parameters may be generated to indicate the properties of the single channel transient signal component/mono transient signal component.

Further, for a mono transient signal component resulting from a combination of a group of single channel transient signal components, transient parameters may be determined for each single channel transient signal component of the group. Thus, the combiner circuit 105 may generate parameter values that indicate channel, timing, duration, signal level for more than one of single channel transient signal components that were part of the group included in the combination.

In some embodiments, such indications of multiple single channel transient signal components for a given mono transient signal component may include separate and individual data for each single channel transient signal components. For example, a channel, timing, duration, signal level may be determined for each of the single channel transient signal components.

In other embodiments, the transient parameter data for multiple single channel transient signal components may be determined/indicated by relative values. For example, for a first single channel transient signal component, which may typically be the dominant single channel transient signal component and in the case of selection combining typically the selected single channel transient signal component, transient parameter values may be determined indicating e.g. the channel, timing, duration, and/or signal level. For one or more of the other single channel transient signal components included in the group being combined, the combiner circuit 105 may determine/generate parameter values that indicate the difference between the values for the first single channel transient signal component and those of the other single channel transient signal component(s). For example, a time difference/offset between the timings of the transient signal components may be indicated, a difference in duration between the transient signal components, and/or a relative difference in signal level between the single channel transient signal components may be determined. In some embodiments, other relative properties between the single channel transient signal components of the group may be included, such as specifically the correlation/coherence between single channel transient signal components that are combined.

For example, for a stereo embodiment where the combiner circuit 105 combines two single channel transient signal components by selecting a dominant transient signal component, the combiner circuit 105 may generate the following transient parameter values:

- Level/Intensity difference between dominant and non-dominant transient
- Time difference between dominant and non-dominant transient
- Optionally, a correlation/coherence metric between the dominant and non-dominant transient.

The combiner circuit 105 is coupled to a downmixer 107 which is fed the mono transient signal components, i.e. it may be fed the transient signal component that are generated by combining, as well as potentially transient signal components that are not included in any combination.

The downmixer 107 is further coupled to the transient detector 103 from which it receives the residual multi-channel audio signal.

The downmixer 107 is arranged to generate a downmix representing the input multichannel audio signal. Specially, the downmixer 107 generates downmix audio data by downmixing the residual multichannel audio signal and the set of mono channel transient signal components.

The downmixer 107 may specifically generate a downmix audio signal which is a signal that has fewer channels than the input multichannel audio signal. The downmixer 107 may generate a residual downmix signal by downmixing the residual multichannel audio signal.

In addition to the downmix audio signal, the downmixer 107 proceeds to generate sets of upmix parameters that enables or facilitates a complementary upmixing by a decoder. The upmix parameters may specifically comprise at least a level difference parameter indicative of a level difference between channels of the multichannel audio signal; a correlation parameter indicative of a coherence between channels of the multichannel audio signal; and a phase difference parameter indicative of a phase difference between channels of the multichannel audio signal.

It will be appreciated that a number of approaches for generating such a downmix audio signal and associated upmix parameters are known and that any approach may be used as appropriate without detracting from the invention.

In many embodiments, the input multichannel audio signal may specifically be a stereo signal and the upmix parameters may be generated from the samples of a left and right channel signal of the input stereo signal. In such cases, the downmix audio signal is a mono downmix audio signal.

The upmix parameters for the residual multichannel audio signal may specifically be parameters that indicate relationships between the signals of different audio channels of the residual multichannel audio signal (specifically the stereo signal) and/or between the downmix signal and audio channels of the residual multichannel audio signal. Typically, the upmix parameters may be indicative of time differences, phase differences, level/intensity differences and/or a measure of similarity, such as correlation.

A set of upmix parameters may comprise at least the following:

- A level difference parameter being indicative of a level difference between channels (and specifically two channels) of the input multichannel audio signal. The level difference parameter may specifically be an Interaural Intensity Difference (IID) and/or an Interaural Level Difference (ILD) as e.g. known from ISO/IEC 23003-3:2020 Information technology - MPEG audio technologies - Part 3: Unified speech and audio coding
- A correlation parameter being indicative of a coherence between channels (and specifically two channels) of the input multichannel audio signal. The correlation parameter may specifically be an Inter-channel Cross Correlation (ICC) parameter as e.g. known from ISO/IEC 23003-3:2020 Information technology - MPEG audio technologies - Part 3: Unified speech and audio coding.
- A phase difference parameter being indicative of a phase difference between channels (and specifically two channels) of the input multichannel audio signal. The phase difference parameter may specifically be an Inter-channel Phase Difference (IPD), Overall Phase Difference (OPD), or Channel Phase Difference (CPD) parameter as e.g. known from ISO/IEC 23003-3:2020 Information technology - MPEG audio technologies - Part 3: Unified speech and audio coding.
- A timing difference parameter being indicative of a time difference between channels (and specifically two channels) of the input multichannel audio signal. The timing difference parameter may specifically be an Inter-channel Time Difference (ITD), as e.g. known from Christof Faller and Frank Baumgarte, Binaural Cue Coding-Part II: Schemes and Applications, IEEE TRANSACTIONS ON SPEECH AND AUDIO PROCESSING, VOL. 11, NO. 6, NOVEMBER 2003.

A set of parameters may specifically include an IID, ICC, and IPD parameter determined in accordance with ISO/IEC 23003-3:2020 Information technology - MPEG audio technologies - Part 3: Unified speech and audio coding. In particular, the upmix parameters IID, ICC, and IPD may be determined as:

$$IID = \frac{\langle l, l \rangle}{\langle r, r \rangle}$$

$$ICC = \left| \frac{\langle l, r \rangle}{\sqrt{\langle l, l \rangle \langle r, r \rangle}} \right|$$

$$IPD = \angle \left\{ \frac{\langle l, r \rangle}{\sqrt{\langle l, l \rangle \langle r, r \rangle}} \right\}$$

where 1 and r represent the signal values of two channels/signals of the residual multichannel audio signal (specifically the left and right channel signal of a stereo signal) and <*a, b*> represents the complex-valued inner product between the vectors *a* and *b*.

Typically, the upmix parameters are provided on a per time and per frequency basis (time frequency tiles). For example, new parameters may periodically be provided for each of a set of subbands.

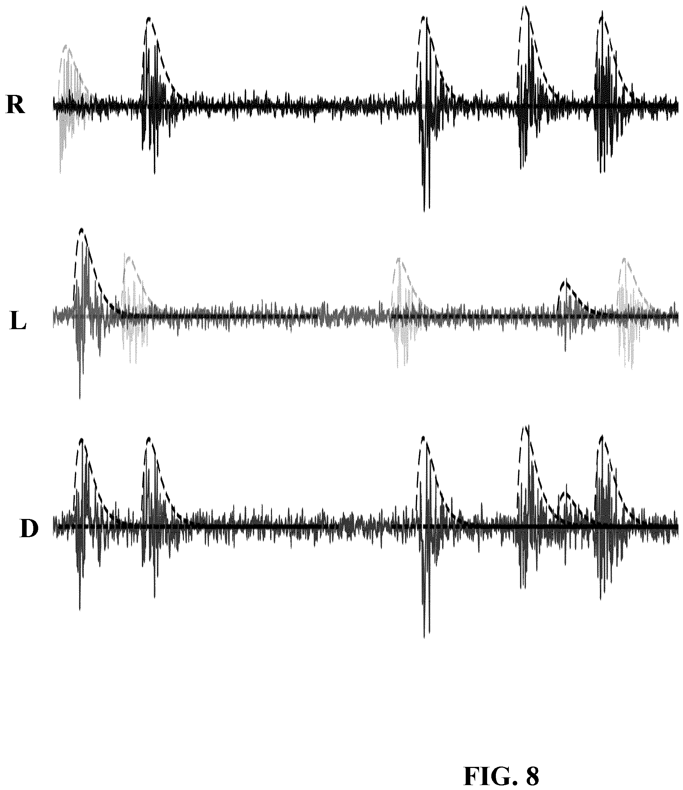

The downmixer 107 is further arranged to downmix the mono transient signal components such that these are represented in fewer channels than the multichannel audio signal. In particular, the downmixer 107 may be arranged to generate a mono transient signal which includes all the mono transient signal components. For example, the mono transient signal components may simply be summed/added to the mono transient signal. E.g. in the example of FIGs. 4-7, the mono transient signal components of the signals of FIGs. 6-7 may be summed together to create a downmixed mono transient signal as illustrated in FIG. 8.

In some embodiments, the downmix audio data may include separate audio data for the residual multichannel audio signal and the mono transient signal (or even for the mono transient signal components). However, in many embodiments, the residual multichannel audio signal and the mono transient signal may be combined into a single downmix audio signal (e.g. simply by a summation of the corresponding mono signals) which may be encoded with the resulting downmix audio data being for a single mono downmix signal.

In many embodiments, the downmixer 107 may accordingly generate a mono downmix signal that includes:

Dominant single channel transient signal components,
Potentially non-combined single channel transient signal components,
A residual multichannel audio signal corresponding to the input multichannel audio signal after extraction of single channel transient signal components.

Different approaches for downmixing e.g. a residual multichannel audio signal may be used, and the downmixing may depend on properties of the multichannel audio signal. For example, for stereo signals, downmixing may in some cases be as simple as averaging the left and right residual signals. However, especially for signals with background diffuse transient components, such as large audience applause, this approach could lead to an increase in density of such components, and it may be more advantageous to simply select one of the residual channels to include in the downmix.

The downmixer 107 is further arranged to generate transient signal component upmix parameters for upmixing the set of mono channel transient signal components. These transient signal component upmix parameters may specifically be the previously described transient parameters. Thus, the downmixer 107 may generate transient signal component upmix parameters by including some or all of the transient parameters previously described as generated by the combiner circuit 105. It will be appreciated that generation of the transient parameters/the transient signal component upmix parameters may equivalently be considered to be part of the operation/function of the combiner circuit 105 and/or part of the operation/function of the downmixer 107.

The transient signal component upmix parameters may thus include information of how to recreate transient signal components of the multichannel audio signal from the received mono transient signal components. For mono transient signal components that directly match a transient signal component of a channel of the input multichannel audio signal (i.e. which is not part of/generated from a combination of a plurality of single channel transient signal components), the transient signal component upmix parameter may include minimal information, such as e.g. merely indicating from which channel of the multichannel audio signal the mono transient signal component originates.

However, for mono transient signal components that are generated by a combination, the transient signal component upmix parameters may include more detailed information, and in particular may include upmix parameters for upmixing the same mono transient signal component into a plurality of transient signal components, and specifically on how to generate transient signal components for different channels of the multichannel audio signal from the same mono transient signal component. Such transient signal component upmix parameters may include an indication of e.g. a relative time offset, relative level etc.

The downmixer 107 is coupled to a data output circuit 109 which generates an (a bitstream of) encoded audio data signal for the multichannel audio signal, where the encoded audio data signal comprises the downmix audio data, the signal upmix parameters, and the transient signal component upmix parameters.

Thus, an output signal is generated which provides a downmix of the input multichannel audio signal where some transient signal components have been removed from individual channels. Further, the encoded audio data signal includes upmix data for the residual multichannel audio signal as well as for the mono transient signal components, including typically providing upmix data for (at least) a first mono transient signal component. This upmix data may provide information for generating multiple single channel transient signal components from the first mono transient signal component.

The decoder audio apparatus of FIG. 2 comprises a receiver 201 that is arranged to receive an encoded audio data signal which represents a multichannel audio signal. The encoded audio data signal comprises downmix audio data representing a downmix of a residual multichannel audio signal and a set of mono transient signal components. The downmix audio data may include encoded audio data for a single downmix audio signal which includes signal components of both the residual multichannel audio signal and the mono transient signal components. In other embodiments, the encoded audio data may include data for a separately encoded residual multichannel audio signal and a downmix transient signal, or even for individually encoded mono transient signal components.

The encoded audio data signal further includes signal upmix parameters for upmixing the residual multichannel audio signal and transient signal component upmix parameters for upmixing the set of mono transient signal components. In particular, for at least one of the mono transient signal components, the transient signal component upmix parameters provide upmix data/parameters for transient signal components of at least two of the channels of the output audio signal. The upmix data/parameters may thus provide individual information for these transient signal components such that transient signal components with different properties (e.g. timing or signal level properties) can be generated.

The encoded audio data signal may specifically be one generated by the encoder audio apparatus of FIG. 1 and thus may have the properties and characteristics as previously described. The decoder audio apparatus will specifically be described in the context of receiving the encoded audio data signal from the encoder audio apparatus of FIG. 1.

The encoded audio data signal may comprise suitable audio decoding functionality for generating the audio signals of the encoded audio data signal. For example, decoding functionality for decoding the downmix signal(s) may be included. Such decoding functionality may of course match/complement the audio encoding of the corresponding signal components by the encoder audio apparatus. Specifically, the receiver 201 may be arranged to decode audio data for a single downmix audio signal being a downmix of both the residual multichannel audio signal and the mono transient signal components.

The receiver 201 is coupled to a first upmixer 203 and a second upmixer 205. The receiver 201 is arranged to feed the downmix of the residual multichannel audio signal to the second upmixer 205 and to feed a downmix of the mono transient signal components, or in some cases the received mono transient signal components, to the first upmixer 203. The first upmixer 203 and second upmixer 205 are arranged to generate upmixed multichannel signals that are fed to an output circuit 207 which is arranged to combine these signals to generate an output multichannel audio signal.

In embodiments where the encoded audio data signal includes audio data for a single downmix signal being a combined downmix of the residual multichannel audio signal and the mono transient signal components, the receiver 201 may be arranged to split the combined downmix into transient signal components and a residual downmix signal representing the residual multichannel audio signal. The extracted transient signal components may then be fed to the first upmixer 203 with the residual downmix being fed to the second upmixer 205. The approaches described for the transient detector 103 may for example also be used by the receiver 301 to extract transient signal components from a received combined downmix.

In some embodiments, the receiver 201 is arranged to extract the set of mono transient signal components using the received transient signal component upmix parameters, and in particular timing parameters.

For example, the transient signal component upmix parameters for a given mono transient signal components may include an indication of a time position and/or duration of the mono transient signal component and the receiver may use such information to extract the mono transient signal components from a received combined downmix. For example, the receiver 201 may simply extract the time interval of a combined downmix which is specified by the transient signal component upmix parameters and use this part as the mono transient signal component. The residual downmix signal may then correspond to the combined downmix with the signals in the identified transient time signals being set to zero.

The second upmixer 205 is arranged to generate an upmixed residual multichannel audio signal by upmixing of the residual downmix audio signal based on the signal upmix parameters, and specifically based on level difference parameters, the correlation parameter, and phase or time difference parameters (e.g. the IID, ICC, IPD, ITD parameters). In some embodiments, a conventional upmixing of a downmix signal may be performed. For example, for a stereo case, the second upmixer 205 may be arranged to perform a Parametric Stereo upmixing.

It will be appreciated that many approaches for upmixing a downmix signal based on upmix parameters are known to the person skilled in the art and that any appropriate upmix operation may be used without detracting from the invention.

The first upmixer 203 may perform an upmixing to generate a set of single channel transient signal components by upmixing the received set of mono transient signal components based on the transient signal component upmix parameters. In many embodiments, the first upmixer 203 may be arranged to generate an upmixed transient audio signal that comprises the set of single channel transient signal components, and indeed in many embodiments, the first upmixer 203 may directly generate the set of single channel transient signal components by generating such a signal (i.e. the sets of single channel transient signal components may be represent/consist of a single transient multichannel audio signal). In some embodiments, the first upmixer 203 may be arranged to generate at least one single channel transient component by upmixing a mono transient signal component and an auxiliary signal component, which specifically may be a decorrelated transient signal component or even a noise signal component, dependent on the transient signal component upmix parameters.

For example, if a coherence/correlation parameter, such as an ICC parameter, is received for a mono transient signal component, the decoder may seek to synthesize an output signal having properties matching the received ICC. For that purpose, a decorrelator may be used. In contrast to traditional decorrelation, it is typically important that the temporal envelope of the decorrelated transient is maintained. Furthermore, perceptually the sensitivity to ICC is very low for transients due to the short integration time in the human auditory system. Therefore, in some embodiments a noise signal, such as a noise burst, with a similar temporal envelope as the mono transient signal components may be used as a decorrelation signal. Such a noise signal may be filtered/ colored using a simple filter matching the average statistics of the transients.

The first upmixer 203 is in particular arranged to generate a plurality of single channel transient signal components from one received mono transient signal component by using transient signal component upmix parameters for a plurality of transient signal components.

For example, for a received mono transient signal component for which only parameters for one single channel transient signal component is received (such as typically a mono transient signal component that does not combine a plurality transient signal components), the first upmixer 203 may generate an upmixed multichannel signal by generating a contribution to a single channel as indicated by a received channel indication (and possibly with a timing and level indicated by a received timing indication and level indication, respectively).

However, for a received mono transient signal component for which parameters for a plurality of single channel transient signal components is received (such as typically a mono transient signal component that does combine a plurality transient signal components), the first upmixer 203 may generate an upmixed multichannel signal by generating a contribution to a plurality of channels. The received transient signal component upmix parameters may for example for each upmixed single channel transient signal component indicate a timing, a channel, and a level, and the first upmixer 203 may for each parameter set be arranged to generate a transient signal component by repeating the process performed once for the case where only one set of upmix parameters is received.

In other embodiments, a received mono transient signal components may be upmixed using an upmix approach similar to that used by the second upmixer 205. For example, the received transient signal component upmix parameters may for a first mono transient signal component receive a set of an inter-channel level/intensity difference parameter, an inter-channel correlation parameter, and an inter-channel time difference parameters (e.g. the IID, ICC, ITD parameters, respectively).

The first upmixer 203 may then use a known approach for upmixing the mono transient signal component based on such parameters. For example, for a stereo case, the first upmixer 203 may be arranged to generate a decorrelated version of the mono transient signal component and apply a 2x2 upmix matrix to the received and decorrelated versions to generate an output stereo transient signal component where the coefficients of the upmix matrix are dependent on the upmix parameters for the mono transient signal component.

However, in the present case, the approach may be used to not only generate a result/output signal that is perceived as a single transient i.e. where a single perceived transient is distributed over the channels (as in conventional upmixing). Rather, the approach may be used to generate multiple transients, i.e. the transients (and specifically transients in different channels) may be generated such that they are perceived as different transients. In particular, the transient signal components (typically of different channels) may be generated to have time differences that may exceed 1, 2, 5, 10 or even 25 msecs. Thus, the transient signal component upmix parameters may include data indicating that different transient signal components generated from a single mono transient signal component have a time difference/offset that may exceed 1, 2, 5, 10 or even 25 msecs (and specifically ITD values may exceed 1, 2, 5, 10 or even 25 msecs).

The second upmixer 205 may specifically upmix the residual downmix audio signal based on the signal upmix parameters and may specifically for a mono downmix signal being upmixed to a stereo signal proceed to apply a matrix multiplication to the samples of the mono downmix audio signal and a decorrelated signal as e.g. known from traditional PS upmixing:

$$\begin{pmatrix} l' \\ r' \end{pmatrix} = \begin{pmatrix} h_{11} & h_{12} \\ h_{21} & h_{22} \end{pmatrix} \begin{pmatrix} m \\ d \end{pmatrix}$$

where a m represents the mono downmix audio signal and d represents the decorrelated signal.

This upmix procedure is typically operated in a time- and frequency dependent way with the upmix parameters being time and frequency dependent. For example, a set of upmix coefficients $h_{xy}$ are typically determined for each time segment/frame and each subband. The upmix coefficients are determined from the received signal upmix parameters.

The exact dependency of the upmix coefficients on the signal upmix parameters will be dependent on the specific embodiment. For example, in many embodiments, the relationships defined for conventional PS may be used as defined in ISO/IEC 23003-3:2020 Information technology - MPEG audio technologies - Part 3: Unified speech and audio coding:

$$\begin{bmatrix} l' \\ r' \end{bmatrix} = \frac{1}{2c} \begin{bmatrix} 1+\alpha & \beta \\ 1-\alpha & -\beta \end{bmatrix} \begin{bmatrix} m \\ d \end{bmatrix}$$

$$\alpha = \frac{IID - 1 + 2j \cdot \sin(IPD) \cdot ICC \cdot \sqrt{IID}}{IID + 1 + 2 \cdot \cos(IPD) \cdot ICC \cdot \sqrt{IID}}$$

$$\beta = \frac{2 \cdot \sqrt{IID \cdot (1 - ICC^2)}}{IID + 1 + 2 \cdot \cos(IPD) \cdot ICC \cdot \sqrt{IID}}$$

$$c = \min\left( \sqrt{\frac{IID + 1}{IID + 1 + 2 \cdot \cos(IPD) \cdot ICC \cdot \sqrt{IID}}}, c_{max} \right)$$

The first upmixer 203 is arranged to generate upmixed transient signal components from the received mono transient signal components.

In some embodiments, the first upmixer 203 may be arranged to operate similarly to the second upmixer 205 in that it may also use a matrix multiplication of the mono transient signal components, and possibly also one or more auxiliary/decorrelated corresponding mono transient signal components, to generate the upmixed multichannel transient audio component. However, the upmixing by the first upmixer 203 is based on the transient signal component upmix parameters.

For example, a 2x2 matrix multiplication of a mono transient signal component and a decorrelated version of this mono transient signal component may be used to generate the upmixed multichannel transient audio component similarly to the approach used in a traditional PS upmix approach. Indeed, in some embodiments, the same upmix approach may be used as for the first upmixer 205 but with the upmix coefficients being determined from the received transient signal component upmix parameters for the mono transient signal component. In some embodiments, the transient signal component upmix parameters may for a given mono transient signal component even specify an IID, IPD, and ICC and the coefficients for the transient upmix may be determined using similar formulas as for the second upmixer 205.

In some embodiments, a transient audio component may for example be defined as a time interval of the received downmix audio signal in which a transient has been detected. Thus, in some embodiments, the first upmixer 203 may be arranged to specifically upmix a time interval (and typically a very short time interval) of the received downmix audio signal using dedicated upmix coefficients determined from dedicated transient signal component upmix parameters. Thus, the upmixing specifically reflects the transient properties and not the properties of the whole audio segment for which the set of upmix parameters are provided.

Thus, even in such a case, a separate and dedicated upmix process is used to generate upmixed multichannel transient audio components that specifically reflect and reproduce the transient properties of the input multichannel audio signal.

In most embodiments, the transient signal component upmix parameters may have a coarse frequency dependency and indeed in many embodiments they may not have any frequency dependency. Often, the same parameter value is provided for the entire audio frequency band. Thus, rather than a separate value being provided for each frequency subband (as is typically the case for the signal upmix parameters), a single value may be provided for the entire frequency range. Accordingly, the data overhead of the transient data may be reduced substantially in comparison to that of the sets of upmix parameters.

In many embodiments, the type of information/ parameters provided for the transient upmix may also be reduced with respect to the signal upmix parameters. Indeed, in many embodiments, the transient signal component upmix parameters for a given transient audio component may not include any correlation/ coherence and/or phase difference information for the channels of the multichannel audio signal. Indeed, in many embodiments, the only relative interchannel properties that are represented by the transient parameter(s) for a given transient audio component may be the inter-channel level/intensity difference (IID) and an inter-channel time difference, ITD. In many embodiments, the transient signal component upmix parameters may for a given transient audio component include an indication of interchannel level difference(s) and timing properties reflecting the time difference between the channels of the output signal. For example, for a given transient audio component, a single full band IID value may be provided together with an indication of the timing difference between the channels, a single full band ITD value.

In such a case, the upmixing performed by the first upmixer 203 may first scale the transient audio component to the different channels of the upmixed multichannel transient audio component such that the resulting upmixed multichannel transient audio component has an inter-channel level difference that matches that indicated by the transient parameter. It may then adjust the timing of one, more, or all single channel transient signal components to achieve the time difference indicated by the received transient signal component upmix parameter.

In many embodiments, the first upmixer 203 may be arranged to perform a panning of the least one transient audio component between two channels of the upmixed multichannel transient audio component in dependence on the transient upmix parameter.

In a panning operation, the individual channel signals of the upmixed multichannel transient audio component may be generated by scaling the transient audio component by weights with the weights or different channels being dependent on the inter-channel level difference. Thus, in such an operation, the channel signals are scaled copies of the transient audio component but with the scaling being dependent on the transient parameter. Effectively, such an operation may generate an upmixed multichannel transient audio component which corresponds directly to the transient audio component but spatially positioned (by the relative scaling) to have a desired position as represented by the transient parameter.

For example, for a stereo situation, a transient audio component in the form of a defined segment of a mono downmix audio signal may be panned between the left and right signals, and thus be positioned in the stereo image, by determining the scalings/ weights for the left and right signal to correspond to the interchannel level difference indicated by the transient parameter.

As a specific example, the first upmixer 203 may be arranged to perform a simple matrix multiplication to the samples of a mono downmix audio signal, such as:

$$\begin{pmatrix} l' \\ r' \end{pmatrix} = \begin{pmatrix} h_1 \\ h_2 \end{pmatrix} m$$

where $h_1$ and $h_2$ are scalar values determined as a function of the inter-channel level difference indicated by the transient parameter (e.g. as an IID), and in many cases may only be dependent on the inter-channel level difference.

As a specific example, the first upmixer 203 can implement a panning operation as follows:

$$\begin{bmatrix} l_t \\ r_t \end{bmatrix} = \begin{bmatrix} \dfrac{\sqrt{iid}}{\sqrt{iid+1}} \\ \dfrac{1}{\sqrt{iid+1}} \end{bmatrix} [t]$$

where the *iid* value represents the linear inter-channel intensity difference between the left and right transient signal and *t* is the transient signal component of the mono downmix audio signal.

In the case an ITD is included, the first upmixer 203 can implement a panning and time delay operation as follows:

$$\begin{bmatrix} l_t(n) \\ r_t(n) \end{bmatrix} = \begin{bmatrix} \dfrac{\sqrt{iid}}{\sqrt{iid+1}} & 0 \\ 0 & \dfrac{1}{\sqrt{iid+1}} \end{bmatrix} \begin{bmatrix} t(n-n_l) \\ t(n-n_r) \end{bmatrix}$$

where the transient signal $t(n-n_l)$ is the transient signal component delayed by $n_l$ samples and the transient signal $t(n-n_r)$ is the transient signal component delayed by $n_r$ samples. Often either $n_l$ or $n_r$ is set to zero and $n_r$ or $n_l$ are set to a positive value to reinstate the desired ITD (e.g. ITD $= (n_l - n_r)/f_s$ with $f_s$ the sampling rate). In other embodiments the time-delays can be implemented as fractional delay filters $fd_l(n)$ and $fd_r(n)$.

The panned signal components may then be delayed or otherwise adapted in time to provide the time difference indicated by the transient signal component upmix parameters. As a result, multiple (in the specific example two) upmixed single channel transient signal components for different channels of the output audio signal may be generated from a single received mono transient signal component.

The first upmixer 203 and the second upmixer 205 are coupled to the output circuit 207 which is arranged to receive the upmixed multichannel signal and the upmixed multichannel transient audio components and to combine them into an output multichannel signal. In many cases, the output circuit 207 may simply receive the upmixed residual multichannel audio signal and the upmixed multichannel transient audio signal/transient signal components and mix them together on a channel by channel basis. Indeed, in many embodiments, the output circuit 207 may simply add the channel signals of the upmixed residual multichannel audio signal and the upmixed multichannel transient audio signal/transient signal components together. It will be appreciated that in some embodiments the output circuit 207 may further include functions for weighing, scaling, filtering, amplifying, attenuating or otherwise applying signal processing to the output signal or indeed to the signals of upmixed residual multichannel audio signal and the upmixed multichannel transient audio signal/transient signal components.

The described approach may provide a very efficient encoding and decoding system. A low complexity signal processing may be used while providing improved audio quality and/or reduced data rate. The approach may apply an effective pruning of transients that may reduce the requirement for explicit data representing the individual transients. This may be achieved while achieving an audio quality degradation that is typically perceived to be acceptable, and indeed in many cases the approach may reduce a data rate and computational burden with substantially no perceived quality reduction.

Processing of transient types of signals is well known to be challenging for, in particular, encoding schemes based on downmixing, such as parametric stereo coding schemes. In particular, it is difficult to maintain the temporal sharpness of transients as the update rate of parameters may be too low and decorrelation processes may tend to introduce smearing. Further, as transients tend to be present in multiple channels, the density of transients in the downmix is typically higher than that of individual channels which makes it even more difficult to dissect and process the individual transients properly. Moreover, due to phase differences between left and right channels, transients may also become distorted in the (mono) downmix signal, making their original properties impossible to recover at the decoder. The described approach may allow a reduction of the density of transients in the downmix by pruning the single channel transient signal components while e.g. still allowing the decoder to reconstruct the multichannel audio signal to include a higher number of transients, and often to maintain the transients in the individual channels.

In the approach, sets of upmix parameters may be generated with each set being provided for a given time interval and a given frequency interval, also referred to as a given time frequency tile or segment.

Each set of upmix parameters may as previously described specifically include an IID, ICC, and IPD or ITD value and thus these parameters are provided with a given time resolution and a given frequency resolution. The time intervals may vary but typically have a fixed duration in many embodiments. Similarly, in some embodiments, the subbands for which parameters are provided may be varied whereas in other embodiments such subbands may be variable.

In many embodiments, the temporal and/or frequency resolution is different for the transient signal component upmix parameters and the signal upmix parameters, and specifically the transient signal component upmix parameters has at least one of a higher temporal resolution and a lower frequency resolution than the signal upmix parameters.

The transient signal component upmix parameters are typically provided with a different time frequency resolution than the signal upmix parameters, and indeed in many cases may be provided with a finer timing resolution or coarser frequency resolution than the signal upmix parameters, and indeed in many cases with both a finer time resolution and a coarser frequency resolution. For example, level difference parameters, correlation parameters, and phase or time difference parameters (e.g. the IID, ICC, IPD, ITD parameters) may be provided as part of both the transient signal component upmix parameters and the signal upmix parameters but with these being provided with a higher temporal resolution and lower frequency resolution for the transient signal component upmix parameters than for the signal upmix parameters. The transient signal component upmix parameters may be provided with a timing granularity that is finer than the (processing) time segments/intervals and finer than the timing granularity for the signal upmix parameters.

The signal upmix parameters may be generated and provided for time frequency tiles corresponding to the subbands and time segments of the processing (e.g. with a fixed number of samples per time segment and subband). However, the transient signal component upmix parameters may in some cases be provided with a finer time resolution. For example, the timing or duration of a transient may be provided with a higher time resolution than the sampling times of the subband samples.

Further, in many embodiments, the transient signal component upmix parameters may be provided with a coarser frequency resolution than for the sets of signal upmix parameters. In particular, in some embodiments, a set of signal upmix parameters may be provided for each subband whereas a single common transient parameter value for the transient signal component upmix parameters is provided for a plurality, and possibly all, subbands.

Such adapted resolutions/granularities may provide improved performance in many embodiments and may allow improved audio quality by adapting to the specific preferences and requirements of different signal components, and in particular the time sensitivities of transient reproduction.

The audio apparatus(s) may specifically be implemented in one or more suitably programmed processors. An example of a suitable processor is provided in the following.

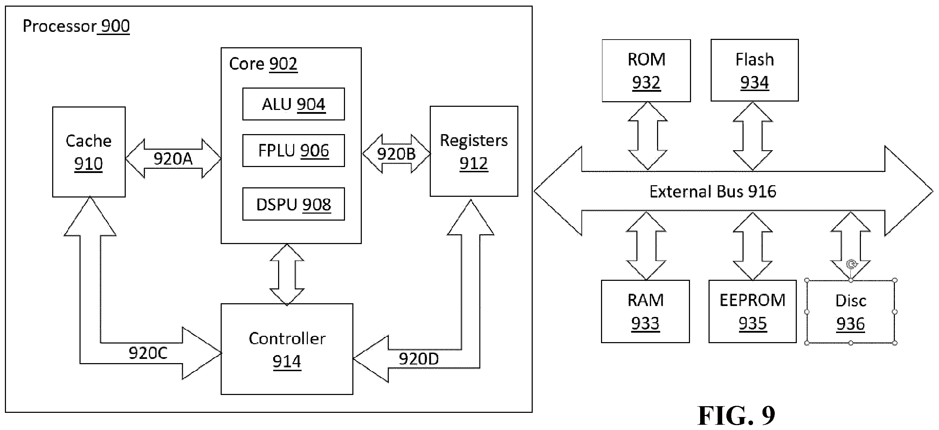

FIG. 9 is a block diagram illustrating an example processor 900 according to embodiments of the disclosure. Processor 900 may be used to implement one or more processors implementing an apparatus as previously described or elements thereof (including in particular one more artificial neural network). Processor 900 may be any suitable processor type including, but not limited to, a microprocessor, a microcontroller, a Digital Signal Processor (DSP), a Field ProGrammable Array (FPGA) where the FPGA has been programmed to form a processor, a Graphical Processing Unit (GPU), an Application Specific Integrated Circuit (ASIC) where the ASIC has been designed to form a processor, or a combination thereof.

The processor 900 may include one or more cores 902. The core 902 may include one or more Arithmetic Logic Units (ALU) 904. In some embodiments, the core 902 may include a Floating Point Logic Unit (FPLU) 906 and/or a Digital Signal Processing Unit (DSPU) 908 in addition to or instead of the ALU 904.

The processor 900 may include one or more registers 912 communicatively coupled to the core 902. The registers 912 may be implemented using dedicated logic gate circuits (e.g., flip-flops) and/or any memory technology. In some embodiments the registers 912 may be implemented using static memory. The register may provide data, instructions and addresses to the core 902.

In some embodiments, processor 900 may include one or more levels of cache memory 910 communicatively coupled to the core 902. The cache memory 910 may provide computer-readable instructions to the core 902 for execution. The cache memory 910 may provide data for processing by the core 902. In some embodiments, the computer-readable instructions may have been provided to the cache memory 910 by a local memory, for example, local memory attached to the external bus 916. The cache memory 910 may be implemented with any suitable cache memory type, for example, Metal-Oxide Semiconductor (MOS) memory such as Static Random Access Memory (SRAM), Dynamic Random Access Memory (DRAM), and/or any other suitable memory technology.

The processor 900 may include a controller 914, which may control input to the processor 900 from other processors and/or components included in a system and/or outputs from the processor 900 to other processors and/or components included in the system. Controller 914 may control the data paths in the ALU 904, FPLU 906 and/or DSPU 908. Controller 914 may be implemented as one or more state machines, data paths and/or dedicated control logic. The gates of controller 914 may be implemented as standalone gates, FPGA, ASIC or any other suitable technology.

The registers 912 and the cache 910 may communicate with controller 914 and core 902 via internal connections 920A, 920B, 920C and 920D. Internal connections may be implemented as a bus, multiplexer, crossbar switch, and/or any other suitable connection technology.

Inputs and outputs for the processor 900 may be provided via a bus 916, which may include one or more conductive lines. The bus 916 may be communicatively coupled to one or more components of processor 900, for example the controller 914, cache 910, and/or register 912. The bus 916 may be coupled to one or more components of the system.

The bus 916 may be coupled to one or more external memories. The external memories may include Read Only Memory (ROM) 932. ROM 932 may be a masked ROM, Electronically Programmable Read Only Memory (EPROM) or any other suitable technology. The external memory may include Random Access Memory (RAM) 933. RAM 933 may be a static RAM, battery backed up static RAM, Dynamic RAM (DRAM) or any other suitable technology. The external memory may include Electrically Erasable Programmable Read Only Memory (EEPROM) 935. The external memory may include Flash memory 934. The External memory may include a magnetic storage device such as disc 936. In some embodiments, the external memories may be included in a system.

The invention can be implemented in any suitable form including hardware, software, firmware, or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc. do not preclude a plurality. Reference signs in the claims are provided merely as a clarifying example shall not be construed as limiting the scope of the claims in any way.

**Claims**

1. An audio apparatus comprising:

   a receiver (101) arranged to receive a multichannel audio signal;
   a transient extractor (103) arranged to generate a residual multichannel audio signal by extracting a set of single channel transient signal components from the multichannel audio signal, each single channel transient signal component of the set of single channel transient signal components being a mono signal component from a channel of the multichannel audio signal;
   a combiner circuit (105) arranged to generate a set of mono transient signal components by combining single channel transient signal components of the set of single channel transient signal components, the combiner circuit (105) being arranged to combine at least a first group of a plurality of single channel transient signal components of the set of single channel transient signal components into a first mono transient signal component of the set of mono transient signal components;
   a downmix circuit (107) arranged to generate downmix audio data by downmixing the residual multichannel audio signal and the set of mono channel transient signal components, the downmix circuit (107) being arranged to generate signal upmix parameters for upmixing the residual multichannel audio signal and transient signal component upmix parameters for upmixing the set of mono channel transient signal components; and
   an output circuit (109) arranged to generate an encoded audio data signal for the multichannel audio signal, the encoded audio data signal comprising the downmix audio data, the signal upmix parameters, and the transient signal component upmix parameters.

2. The audio apparatus of claim 1 wherein the combiner circuit (105) is arranged to select single channel transient signal components for the first group dependent on a time difference between the single channel transient signal components of the set of single channel transient signal components.

3. The audio apparatus of claim 2 wherein the combiner circuit (105) is arranged to generate the first mono transient signal component by a weighted combination of single channel transient signal components of the first group.

4. The audio apparatus of claim 2 or 3 wherein the combiner circuit (105) is arranged to generate the first mono transient signal component by a selection of a single channel transient signal component from the first group.

5. The audio apparatus of any previous claim wherein the transient signal component upmix parameters for the first mono transient signal component comprises at least one of:

   a level difference parameter indicative of a level difference between single channel transient signal components of the first group; and
   a timing difference parameter indicative of a time difference between single channel transient signal components of the first group.

6. The audio apparatus of any previous claim wherein the transient signal component upmix parameters for the first mono transient signal component comprises upmix parameters for upmixing a plurality of upmixed transient signal components.

7. The audio apparatus of any previous claim wherein the downmix circuit (107) is arranged to generate the downmix audio data to represent a downmix audio signal being a combination of a downmix signal component of the residual multichannel audio signal and mono transient signal components of the set of mono transient signal components.

8. The audio apparatus of any previous claim wherein the downmix circuit (107) is arranged to generate the downmix audio data to comprise separate audio data for a downmix audio signal of the residual multichannel audio signal and for the set of mono transient signal components.

9. An audio apparatus comprising:

a receiver (201) arranged to receive an encoded audio data signal representing a multichannel audio signal, the encoded audio data signal comprising downmix audio data representing a downmix of a residual multichannel audio signal, a set of mono channel transient signal components, signal upmix parameters for upmixing the residual multichannel audio signal, and transient signal component upmix parameters for upmixing the set of mono transient signal components, the transient signal component upmix parameters for a first mono transient signal component of the set of mono transient signal components comprising upmix data for a plurality of transients;

a first upmixer (203) arranged to generate a set of single channel transient signal components by upmixing the set of mono transient signal components based on the transient signal component upmix parameters, including generating a plurality of single channel transient signal components from the first mono transient signal component using the upmix data for the plurality of transients;

a second upmixer (205) arranged to generate an upmixed residual multichannel audio signal from the downmix of the residual multichannel audio signal and the signal upmix parameters; and

an output circuit (207) arranged to generate an output multichannel audio signal by combining at least the upmixed residual multichannel audio signal and the set of single channel transient signal components.

10. The audio apparatus of claim 9 wherein the downmix audio data comprises encoded audio data for a downmix audio signal comprising both the downmix of a residual multichannel audio signal and the set of mono audio signals; and the receiver (201) is arranged to generate the downmix of a residual multichannel audio by extracting the set of mono transient signal components from the downmix audio signal.

11. The audio apparatus of claim 10 wherein the receiver (201) is arranged to extract the set of mono transient signal components using the transient signal component upmix parameters.

12. The audio apparatus of claim 10 or 11 wherein the first upmixer (203) is arranged to generate at least one single channel transient component by upmixing a mono transient signal component and a noise signal component dependent on the transient signal component upmix parameters.

13. The audio apparatus of any previous claim wherein the transient signal component upmix parameters has at least one of a higher temporal resolution and a lower frequency resolution than the signal upmix parameters.

14. A method of operation for an audio apparatus, the method comprising:

receiving a multichannel audio signal;

generating a residual multichannel audio signal by extracting a set of single channel transient signal components from the multichannel audio signal, each single channel transient signal component of the set of single channel transient signal components being a mono signal component from a channel of the multichannel audio signal;

generating a set of mono transient signal components by combining single channel transient signal components of the set of single channel transient signal components, the combiner circuit (105) being arranged to combine at least a first group of a plurality of single channel transient signal components of the set of single channel transient signal components into a first mono transient signal component of the set of mono transient signal components;

generating a downmix audio data by downmixing the residual multichannel audio signal and the set of mono channel transient signal components, the downmix circuit (107) further being arranged to generate signal upmix parameters for upmixing the residual multichannel audio signal and transient signal component upmix parameters for upmixing the set of mono channel transient signal components; and

generating an encoded audio data signal for the multichannel audio signal, the encoded audio data signal comprising the downmix audio data, the signal upmix parameters, and the transient signal component upmix parameters.

15. A method of operation for an audio apparatus comprising:

receiving an encoded audio data signal representing a multichannel audio signal, the encoded audio data signal comprising downmix audio data representing a downmix of a residual multichannel audio signal, a set of mono channel transient signal components, signal upmix parameters for upmixing the residual multichannel audio signal, and transient signal component upmix parameters for upmixing the set of mono transient signal components, the transient signal component upmix parameters for a first mono transient signal component of the set of mono transient signal components comprising upmix data for a plurality of transients;

generating a set of single channel transient signal components by upmixing the set of mono transient signal components based on the transient signal component upmix parameters, including generating a plurality of single channel transient signal components from the first mono transient signal component using the upmix data for the plurality of transients;

generating an upmixed residual multichannel audio signal from the downmix of the residual multichannel audio signal and the signal upmix parameters; and

generating an output multichannel audio signal by combining at least the upmixed residual multichannel audio signal and the set of single channel transient signal components.

16. An encoded audio data signal representing a multichannel audio signal, the encoded audio data signal comprising downmix audio data representing a downmix of a residual multichannel audio signal, a set of mono channel transient signal components, signal upmix parameters for upmixing a residual multichannel audio signal and transient signal component upmix parameters for upmixing the set of mono transient signal components, the transient signal component upmix parameters for a first mono transient signal component of the set of mono transient signal components comprising upmix data for a plurality of transients.

17. A computer program product comprising computer program code means adapted to perform all the steps of claims 14 or 15 when said program is run on a computer.

**FIG. 1**

**FIG. 2**

**FIG. 3**

FIG. 4

FIG. 5

**FIG. 6**

**FIG. 7**

FIG. 8

FIG. 9

Europäisches
Patentamt

European
Patent Office

Office européen
des brevets

# EUROPEAN SEARCH REPORT

**Application Number**

EP 24 19 1760

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 11 094 331 B2 (FRAUNHOFER GES FORSCHUNG [DE]) 17 August 2021 (2021-08-17) <br> * column 2, line 7 - column 5, line 12 * <br> * column 5, line 35 - line 67 * <br> * column 8, line 50 - column 10, line 21 * <br> * column 15, line 3 - column 21, line 46 * <br> * column 23, line 30 - column 25, line 5 * <br> ----- | 1-17 | INV. <br> G10L19/08 <br> H04S3/00 <br> G06N3/045 <br> G10L19/008 |
| A | FUG RICHARD ET AL: "Temporal Noise Shaping on MDCT Subband Signals for Transform Audio Coding", 2023 IEEE WORKSHOP ON APPLICATIONS OF SIGNAL PROCESSING TO AUDIO AND ACOUSTICS (WASPAA), IEEE, 22 October 2023 (2023-10-22), pages 1-5, XP034423558, DOI: 10.1109/WASPAA58266.2023.10248079 [retrieved on 2023-09-15] <br> * page 1, left-hand column, paragraph 1 - page 2, left-hand column, paragraph 2 * <br> * page 2, right-hand column, paragraph 3 - page 3, left-hand column, paragraph 4 * <br> ----- | 1-17 | |
| A | ADAMI ALEXANDER ET AL: "Transient-to-noise ratio restoration of coded applause-like signals", 2017 IEEE WORKSHOP ON APPLICATIONS OF SIGNAL PROCESSING TO AUDIO AND ACOUSTICS (WASPAA), IEEE, 15 October 2017 (2017-10-15), pages 349-353, XP033264960, DOI: 10.1109/WASPAA.2017.8170053 [retrieved on 2017-12-07] <br> * page 349, left-hand column, paragraph 1 - page 351, left-hand column, paragraph 3 * <br> ----- <br> -/-- | 1-17 | **TECHNICAL FIELDS SEARCHED (IPC)** <br><br> G10L <br> H04S <br> G06N |

The present search report has been drawn up for all claims

| Place of search | Date of completion of the search | Examiner |
|---|---|---|
| Munich | 17 January 2025 | Ebbinghaus, Stefanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

Europäisches
Patentamt

European
Patent Office

Office européen
des brevets

**EUROPEAN SEARCH REPORT**

**Application Number**

EP 24 19 1760

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 8 831 931 B2 (FRAUNHOFER GES FORSCHUNG [DE]) 9 September 2014 (2014-09-09) * column 1, line 1 - column 5, line 62 * * column 9, line 20 - column 15, line 40 * ----- | 1-17 | |
| A | US 9 293 145 B2 (HUAWEI TECH CO LTD [CN]) 22 March 2016 (2016-03-22) * column 1, line 15 - column 3, line 32 * * column 15, line 45 - column 17, line 10 * ----- | 1-17 | |

TECHNICAL FIELDS
SEARCHED      (IPC)

The present search report has been drawn up for all claims

| Place of search | Date of completion of the search | Examiner |
|---|---|---|
| Munich | 17 January 2025 | Ebbinghaus, Stefanie |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.......................................................................................
& : member of the same patent family, corresponding
    document

EPO FORM 1503 03.82 (P04C01)

page 2 of 2

## ANNEX TO THE EUROPEAN SEARCH REPORT
## ON EUROPEAN PATENT APPLICATION NO.

EP 24 19 1760

17-01-2025

| Patent document cited in search report | | Publication date | Patent family member(s) | | Publication date |
|---|---|---|---|---|---|
| US 11094331 | B2 | 17-08-2021 | AR | 107662 A1 | 23-05-2018 |
| | | | AU | 2017219696 A1 | 16-11-2017 |
| | | | BR | 112017024480 A2 | 24-07-2018 |
| | | | CA | 2985019 A1 | 24-08-2017 |
| | | | CN | 107925388 A | 17-04-2018 |
| | | | EP | 3417544 A1 | 26-12-2018 |
| | | | EP | 3627507 A1 | 25-03-2020 |
| | | | EP | 4462677 A2 | 13-11-2024 |
| | | | ES | 2771200 T3 | 06-07-2020 |
| | | | JP | 6603414 B2 | 06-11-2019 |
| | | | JP | 7007344 B2 | 24-01-2022 |
| | | | JP | 2019500641 A | 10-01-2019 |
| | | | JP | 2020024440 A | 13-02-2020 |
| | | | KR | 20180016417 A | 14-02-2018 |
| | | | MX | 371223 B | 09-01-2020 |
| | | | MY | 191093 A | 30-05-2022 |
| | | | PL | 3417544 T3 | 29-06-2020 |
| | | | PT | 3417544 T | 02-03-2020 |
| | | | RU | 2685024 C1 | 16-04-2019 |
| | | | TW | 201732784 A | 16-09-2017 |
| | | | US | 2018190303 A1 | 05-07-2018 |
| | | | US | 2020090670 A1 | 19-03-2020 |
| | | | US | 2020402520 A1 | 24-12-2020 |
| | | | US | 2024347067 A1 | 17-10-2024 |
| | | | WO | 2017140600 A1 | 24-08-2017 |
| | | | ZA | 201707336 B | 27-02-2019 |
| US 8831931 | B2 | 09-09-2014 | AR | 082542 A1 | 12-12-2012 |
| | | | AR | 082543 A1 | 12-12-2012 |
| | | | AR | 098078 A2 | 27-04-2016 |
| | | | AU | 2011295367 A1 | 11-04-2013 |
| | | | AU | 2011295368 A1 | 28-03-2013 |
| | | | BR | 112013004362 A2 | 19-09-2017 |
| | | | BR | 112013004365 A2 | 02-06-2020 |
| | | | CA | 2809404 A1 | 01-03-2012 |
| | | | CA | 2809437 A1 | 01-03-2012 |
| | | | CA | 2887939 A1 | 01-03-2012 |
| | | | CN | 103180898 A | 26-06-2013 |
| | | | CN | 103460282 A | 18-12-2013 |
| | | | EP | 2609590 A1 | 03-07-2013 |
| | | | EP | 2609591 A1 | 03-07-2013 |
| | | | EP | 2924687 A1 | 30-09-2015 |
| | | | EP | 3144932 A1 | 22-03-2017 |
| | | | EP | 3471091 A1 | 17-04-2019 |
| | | | ES | 2544077 T3 | 27-08-2015 |
| | | | ES | 2585402 T3 | 05-10-2016 |

For more details about this annex : see Official Journal of the European Patent Office, No. 12/82

page 1 of 2

EP 4 687 140 A1

**ANNEX TO THE EUROPEAN SEARCH REPORT**
**ON EUROPEAN PATENT APPLICATION NO.**

EP 24 19 1760

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2025

| Patent document cited in search report | | Publication date | Patent family member(s) | | Publication date |
|---|---|---|---|---|---|
| | | | ES | 2706490 T3 | 29-03-2019 |
| | | | HK | 1186833 A1 | 21-03-2014 |
| | | | HK | 1187144 A1 | 28-03-2014 |
| | | | JP | 5775582 B2 | 09-09-2015 |
| | | | JP | 5775583 B2 | 09-09-2015 |
| | | | JP | 6196249 B2 | 13-09-2017 |
| | | | JP | 2013539553 A | 24-10-2013 |
| | | | JP | 2013539554 A | 24-10-2013 |
| | | | JP | 2015129953 A | 16-07-2015 |
| | | | KR | 20130069770 A | 26-06-2013 |
| | | | KR | 20130079507 A | 10-07-2013 |
| | | | MY | 156770 A | 31-03-2016 |
| | | | MY | 178197 A | 06-10-2020 |
| | | | MY | 180970 A | 14-12-2020 |
| | | | PL | 2609590 T3 | 30-10-2015 |
| | | | PL | 2609591 T3 | 30-11-2016 |
| | | | PL | 3144932 T3 | 30-04-2019 |
| | | | PT | 2609591 T | 12-07-2016 |
| | | | PT | 3144932 T | 04-02-2019 |
| | | | RU | 2013112853 A | 27-09-2014 |
| | | | RU | 2013112903 A | 27-09-2014 |
| | | | RU | 2015102326 A | 10-06-2015 |
| | | | SG | 187950 A1 | 28-03-2013 |
| | | | SG | 188254 A1 | 30-04-2013 |
| | | | SG | 2014006738 A | 28-03-2014 |
| | | | TR | 201900417 T4 | 21-02-2019 |
| | | | TW | 201214414 A | 01-04-2012 |
| | | | TW | 201214417 A | 01-04-2012 |
| | | | US | 2013173273 A1 | 04-07-2013 |
| | | | US | 2013173274 A1 | 04-07-2013 |
| | | | US | 2014222441 A1 | 07-08-2014 |
| | | | WO | 2012025282 A1 | 01-03-2012 |
| | | | WO | 2012025283 A1 | 01-03-2012 |
| | | | ZA | 201302050 B | 23-12-2013 |
| US 9293145 | B2 | 22-03-2016 | CN | 103026406 A | 03-04-2013 |
| | | | EP | 2609589 A1 | 03-07-2013 |
| | | | ES | 2585587 T3 | 06-10-2016 |
| | | | KR | 20130086221 A | 31-07-2013 |
| | | | US | 2013236022 A1 | 12-09-2013 |
| | | | WO | 2012040897 A1 | 05-04-2012 |

EPO FORM P0459

For more details about this annex : see Official Journal of the European Patent Office, No. 12/82

page 2 of 2

34

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **E. SCHUIJERS** ; **W. OOMEN** ; **B. DEN BRINKER** ; **J. BREEBAART**. Advances in Parametric Coding for High-Quality Audio. *114th AES Convention, Amsterdam, The Netherlands*, 2003
- Low Complexity Parametric Stereo Coding. **E. SCHUIJERS** ; **J. BREEBAART** ; **H. PUMHAGEN** ; **J. ENGDEGÅRD**. 116th AES, Berlin, Germany. 2004
- **ADAMI, A.** ; **HERZOG, A.** ; **DISCH, S.** ; **HERRE, J.** Transient-to-noise ratio restoration of coded applause-like signals. *2017 IEEE Workshop on Applications of Signal Processing to Audio and Acoustics (WASPAA)*, October 2017, 349-353
- **MARTIN, R.** Noise power spectral density estimation based on optimal smoothing and minimum statistics. *IEEE Transactions on speech and audio processing*, 2001, vol. 9 (5), 504-512
- **CHRISTOF FALLER** ; **FRANK BAUMGARTE**. Binaural Cue Coding-Part II: Schemes and Applications. *IEEE TRANSACTIONS ON SPEECH AND AUDIO PROCESSING*, November 2003, vol. 11 (6)